# EUROPEAN PATENT APPLICATION

(11) **EP 4 459 165 A1**
(43) Date of publication of application: **06.11.2024**
(21) Application number: 22916878.6
(22) Date of filing: 28.12.2022
(51) Int. Cl.: F16K 17/40, F16K 17/38

(54) **SINGLE-USE EMERGENCY THERMAL VALVE**

(30) Priority: 29.12.2021 RU 2021139682
(71) Applicant: Joint Stock Company "Atomenergoproekt", Moscow 107996 (RU); Science and Innovations - Nuclear Industry Scientific Development, Private Enterprise, Moscow 119017 (RU)
(72) Inventor: BEZLEPKIN, Vladimir Viktorovich, Saint Petersburg, 194223 (RU); KUKHTEVICH, Vladimir Olegovich, Saint Petersburg, 193312 (RU); MITRYUKHIN, Andrey Gennadievich, Saint Petersburg, 197343 (RU); KURCHEVSKIY, Aleksey Ivanovich, Saint Petersburg, 196657 (RU); MATYUSHEV, Leonid Aleksandrovich, Saint Petersburg, 196657 (RU); DROBYSHEVSKIY, Maksim Anatolyevich, Saint Petersburg, 194352 (RU); KOROBEINIKOV, Kirill Yuryevich, Saint Petersburg, 197350 (RU); SHAMRAY, Yevgeniya Leonidovna, Saint Petersburg, 196626 (RU)
(74) Representative: Osmans, Voldemars
(86) International application number: PCT/RU2022/000399
(87) International publication number: WO 2023/128808

(57) **Abstract**

A single-action emergency thermal valve relates to valves which open a cooling fluid supply channel in case of an accident.

The thermal valve comprises a body with a through channel to supply the cooling fluid through an inlet of the thermal valve in the direction of its outlet, and a fuse, which melting point is chosen in accordance with the valve actuation temperature. The through channel is made in the form of an elbow and consists of a horizontal section and a downward-directed vertical section. The inlet is located in the lower part of the vertical section; the outlet of the through channel is provided with a plug made of high-strength refractory material and attached to a flange of the horizontal section with the fuse. The ratio of volumes of the horizontal and the vertical sections of the through channel is chosen so that a cooling fluid would neither enter the horizontal section of the through channel nor affect the melting point of the plug.

## Description

### TECHNICAL FIELD

A single-action emergency thermal valve relates to valves which open a cooling fluid supply channel in case of an accident and can be used in various industries, particularly in the nuclear industry.

### BACKGROUND ART

To ensure safe operation of nuclear power plants (NPP), it is important that in case of an accident it is possible to supply a cooling fluid to rooms which require heat removal, particularly to a core melt localization device (CMLD) where molten parts of nuclear reactor core and pressure vessel get into in case of a beyond-design-basis accident. Valves which are used for it must ensure the possibility of opening a cooling fluid supply channel in the passive mode, i.e. respond to the exceedance of a predetermined value by the temperature of a medium, which requires cooling fluid supply, without any control pulses. At the same time, such channel must be opened in the most reliable and efficient way.

Various technical solutions have been used to solve this task.

An emergency single-acting valve mainly for cooling water supply (Russian patent No. 2469233, published on 10.12.2012), which comprises a cylindrical body with an inlet and outlet made in its ends, the first and the second spring-controlled stems axially installed in the cylindrical body, having a damper with a clamp gasket attached to the end of the second stem for leak-tight closure of the inlet, a fuse and a fixing device connecting the adjoining ends of the first and the second, wherein the fuse is located in a perforated sleeve which is installed on the outlet wall of the cylinder body, and a piston with the possibility to enter into the perforated sleeve is installed on the free end of the first stem, and the fixing device consists of a cone installed on the end of the first stem with a split C-ring located on it in the open position, a thrust collar for the ring and a shell installed on the second stem, in this case the ring is installed in such a way so that it slides off the cone into the shell in the course of the first stem movement in order to ensure movement of the stems in one direction, is known. An increase in temperature around the outlet of the cylindrical body serves as a command to activate the emergency thermal valve (cooling water supply mode). The temperature must be sufficient to decompose the fuse on which the spring-controlled piston rests. The fuse melts at approximately 600 °C and flows out of the holes in the perforated sleeve; the piston is pressed into the sleeve by the spring and pulls the stem which slides over the sleeve. The separated split spring ring collides with the sleeve end on the cone end cap and compresses when enters the shell, releasing the stroke of the shell with the stem which in turn causes the spring to expand and displace the shell which sits on the starter cylinder. At the same time, the stem pulls the flap with the gasket and opens the inlet of cooling water supply to the equipment. Water comes from the tank and travels through the inlet between the flap seat and further into the interrib channels, bounded by ribs, to the outlet for the supply to the equipment to be cooled.

Such solution ensures cooling fluid supply in case on an accident, but its drawbacks are low flow rate of the cooling fluid in the cooling water supply mode due to the obstruction of the flow part of the valve with structural components, insufficient reliability of operation of the emergency thermal valve due to the need for consecutive mechanical displacements of a number of the valve components to open it, a large scope of periodic and routine maintenance works in the standby mode, such as verifications of forces of the springs in the constantly highly-loaded state in the standby mode, or their periodic replacements, and significant bulkiness of the structure.

The closest analogue of the claimed invention in terms of designated use, technical essence, and achieved results is a single-action emergency thermal valve (Russian patent No. 2666841, published on 12.09.2018), which comprises a body with a through channel for supplying cooling through its inlet toward its outlet, and a fuse located in the through channel of the body, wherein the fuse consists of at least two parts completely covering the cross-section of the through channel, made of materials with different melting points and located in the through channel in series with increasing melting point of each successive part in the direction from the inlet of the through channel to its outlet.

Such solution makes it possible to improve reliability and efficiency of operation of the emergency thermal valve through increasing the flow rate of the cooling fluid in the cooling fluid supply mode while retaining its dimensions. The drawbacks of such a solution are:
- impact of cooling fluid parameters on the valve actuation temperature, since the cooling fluid is in direct contact with the fuse and affects its temperature;
- in case of uneven heating of the valve there may be a partial melt-through of the fuse and supply of the cooling fluid with lower flow rate. If a small hole opens, it will not get any larger due to intense cooling of the fuse;
- selection of materials of different melting point requires complex thermohydraulic calculations which affects the valve actuation precision.

The task of this invention is to develop a water supply valve for a core melt localization device of high reliability.

The technical result of this invention is improvement of the reliability of the water supply valves for the core melt localization device through improving the valve actuation temperature precision and ensuring instant opening of the full cross-section of the valve.

### SUMMARY OF INVENTION

The task of this invention is to develop a water supply valve for a core melt localization device of high reliability.

The technical result of this invention is improvement of the reliability of the water supply valves for the core melt localization device through improving the valve actuation temperature precision and ensuring instant opening of the full cross-section of the valve.

This invention is a single-action emergency thermal valve which comprises a body with a through channel for cooling fluid supply through an inlet of the thermal valve in the direction of its outlet, and a fuse, which melting point is chosen in accordance with the valve actuation temperature, characterized in that the through channel is made in the form of an elbow and consists of a horizontal section and a downward-directed vertical section; the inlet of the channel is located in the lower part of the vertical section; the outlet of the through channel is provided with a plug made of high-strength refractory material and attached to a flange of the horizontal section with the fuse, wherein the ratio of volumes of the horizontal and the vertical sections of the through channel is chosen so that a cooling fluid would neither enter the horizontal section of the through channel nor affect the melting point of the plug.

In some embodiments of the invention, the plug may be attached to the tip with a solder joint accompanied by a capillary gap between them; the gap value is chosen so that an internal pressure inside the valve would be less than a capillary pressure of the melted solder in case of a partial melt-through of the solder joint.

### BRIEF DESCRIPTION OF DRAWINGS

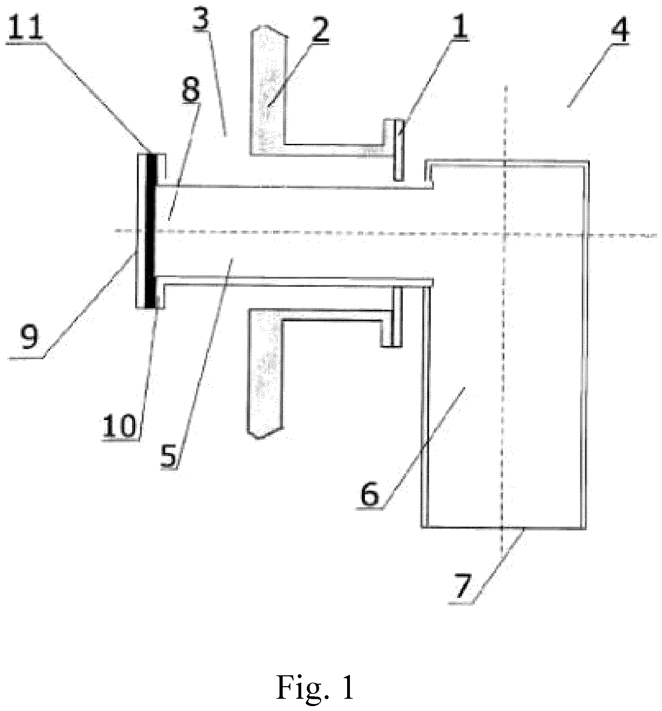

The essence of the proposed technical solution is disclosed in Fig. 1 which shows a cross-section of the single-action emergency thermal valve in its initial position in the standby mode.

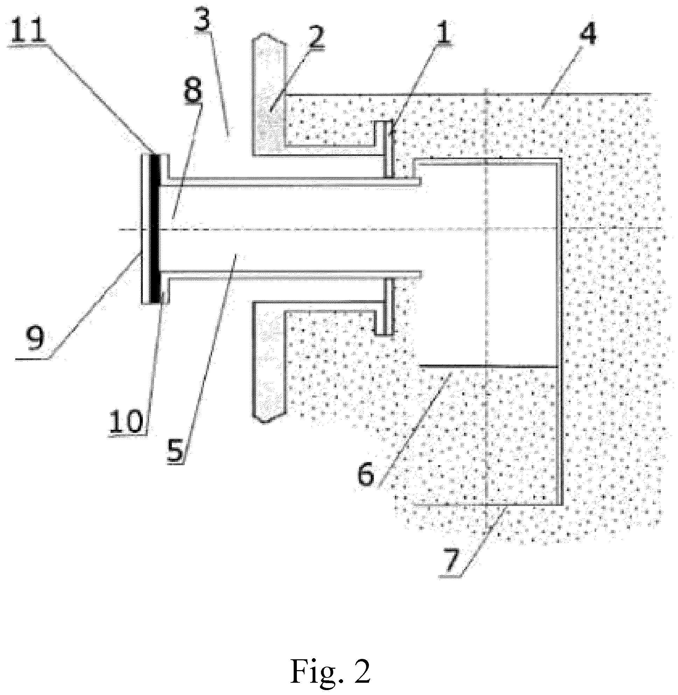

Fig. 2 shows a cross-section of the single-action emergency thermal valve in the cooling fluid tank filling mode.

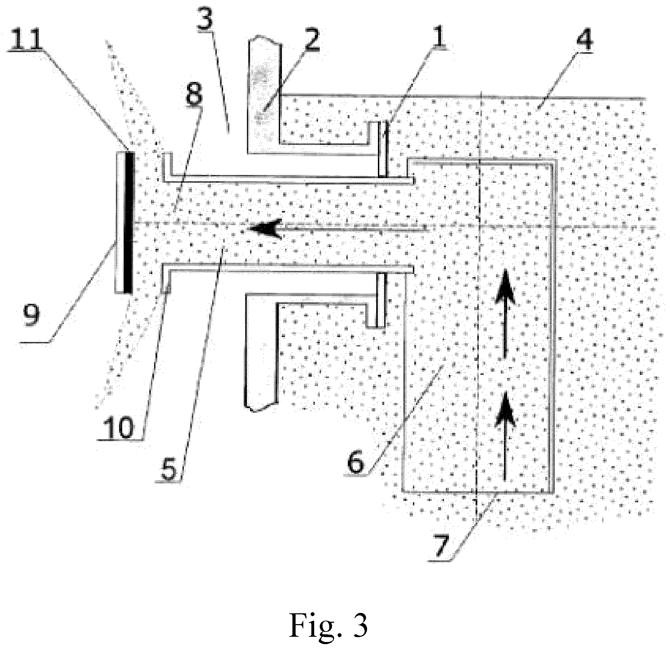

Fig. 3 shows a cross-section of the single-action emergency thermal valve in the cooling fluid supply mode, i.e. after the solder has completely melted, with arrows indicating the cooling fluid flow direction.

### DESCRIPTION OF EMBODIMENTS

A preferred embodiment of the proposed single-action emergency thermal valve comprises a body 1 placed and fixed in a wall 2, which divides a room 3, where a cooling fluid needs to be supplied to, and a room 4, which is filled with the cooling fluid at the initial stage of an accident. The body 1 has a through channel, which is made in the form of an elbow and consists of a horizontal section 5 and a downward-directed vertical section 6. The ratio of volumes of the horizontal section 5 and the vertical section 6 of the through channel is chosen so that the cooling fluid would neither enter the horizontal section of the through channel nor affect the melting point of a plug. An inlet 7 of the through channel is located in the lower part of the vertical section 6. An outlet 8 of the channel is sealed with a plug 9 connected to a flange 10 with a solder 11.

The proposed thermal valve operates in three modes, i.e. standby mode, cooling fluid filling mode, and cooling fluid supply mode, as follows.

In the standby mode, the temperature at the outlet 8 is much lower than the melt point of the solder 11. Thus, the rooms 3 and 4 are reliably isolated from each other.

In the cooling fluid filling mode, the room 4 is filled with the cooling fluid. At the same time, its maximum level 12 must be higher than the outlet 7 of the channel. As a result, air in the vertical section 6 is compressed and prevents the fluid to enter the horizontal section 5, so the plug 5 is insulated against the fluid impact, and its temperature is determined by the temperature in the room 3. In the preferred embodiment, the ratio of volumes of the horizontal section 6 and the vertical section 5 of the through channel of the thermal valve are chosen so that the water enters the horizontal section 5 of the thermal vale and affects the melting point of the plug 11 under no circumstances. This condition is calculated during the thermal valve design, on the basis of the pressure values of the cooling fluid in the thermal valve location and volumes of the horizontal section 5 and the vertical section 6 of the through channel of the thermal valve.

In the cooling fluid supply mode, the temperature in the room 3 rises. When the temperature reaches the melting point of the solder 11, the solder 11 changes into a liquid state. It is highly likely that the solder 11 will change into a liquid state unevenly. However, due to the presence of a capillary gap between the plug 9 and the flange 10, the solder 11 will not leak out of the places where it has changed into a liquid state. It prevents a pressure drop inside the thermal valve until the solder completely melts across the whole cross-section of the solder j oint. Only after the whole layer of the solder 11 has changed into a liquid state, the complete detachment of the plug 5 occurs. The full cross-section of the valve opens.

The single-action emergency thermal valve can be used in various industries where providing cooling fluid supply in case of an accident is required, particularly in the nuclear industry.

## Claims

1. A single-action emergency thermal valve, comprising a body with a through channel for supply of a cooling fluid through an inlet of the thermal valve in the direction of its outlet, and a fuse which melting point is chosen in accordance with the valve actuation temperature, **characterized in that** the through channel is made in the form of an elbow and consists of a horizontal section and a downward-directed vertical section; the inlet of the channel is located in the lower part of the vertical section; the outlet of the through channel is provided with a plug made of a high-strength refractory material and attached to a flange of the horizontal section with the fuse, wherein the ratio of volumes of the horizontal and the vertical sections of the through channel is chosen so that the cooling liquid would neither enter the horizontal section of the through channel nor affect the melting point of the plug.

2. The emergency thermal valve according to claim 1, **characterized in that** the plug is attached to a tip with a solder joint accompanied by a capillary gap between them, wherein a gap value is chosen so that an internal pressure inside the valve would be less than a capillary pressure of the melted solder in case of a partial melt-through of the solder joint.
